# FASCICULE DE BREVET EUROPEEN

(11) **EP 4 231 270 B1**
(45) Date de publication et mention de la délivrance du brevet: **31.07.2024**
(21) Numéro de dépôt: 23154106.1
(22) Date de dépôt: 31.01.2023
(51) Int. Cl.: G09B 19/00, A43C 7/00, A43C 1/00

(54) **DISPOSITIF D`AIDE AU NOUAGE DE NOEUDS À UNE SEULE MAIN**
VORRICHTUNG ZUR UNTERSTÜTZUNG DES KNOTENKNÜPFENS AN EINER HAND
DEVICE FOR ASSISTING TYING KNOTS BY ONE HAND

(30) Priorité: 21.02.2022 FR 2201521
(43) Date de publication de la demande: 23.08.2023
(73) Titulaire: Priollaud, Arnaud, 17330 Doeuil-sur-le-Mignon (FR)
(72) Inventeur: Priollaud, Arnaud, 17330 Doeuil-sur-le-Mignon (FR)
(74) Mandataire: IP Trust

(56) Documents cités:
- FR-A1- 2 457 653
- US-A- 1 481 903
- US-A- 468 819
- US-A- 691 853
- US-A1- 2010 148 503
- US-A1- 2010 269 373
- US-A1- 2013 117 976

## Description

### Domaine technique

L'invention se situe dans le domaine dispositif d'aide au nouage de noeud à une seule main.

### État de la technique antérieure

Le laçage de chaussure est un geste qui peut s'avérer difficile, si ce n'est insurmontable, pour certaines personnes. Ce peut être le cas pour des personnes handicapées physiques telles que des personnes hémiplégiques ou ayant eu un accident vasculaire cérébral.

Un dispositif connu de l'art antérieur est décrit dans le brevet FR 2 457 653 A1 (GANOOTE LEBLANC MARCEL), 26 décembre 1980.

### Exposé de l'invention

Un but de l'invention est notamment de remédier à tout ou partie des inconvénients précités.

Une idée qui est à la base de l'invention est de proposer un dispositif portable d'aide au nouage d'un lacet, ledit dispositif comportant une partie formant socle et une partie formant mât dans une configuration d'utilisation, le mât présentant en une extrémité, selon une direction longitudinale, une surface d'appui d'une partie du lacet, et un moyen de retenue par friction prévu pour maintenir ladite partie de lacet sur ladite surface.

Suivant un aspect de l'invention, le moyen de retenue est une encoche formée sur ladite extrémité, la surface d'appui étant formée par le fond de l'encoche. L'encoche peut présenter une forme de V.

Dans une autre réalisation, le moyen de retenue est formé par deux taquets coinceurs disposés de part et d'autre de la surface d'appui.

Selon une possibilité, le mât présente en outre deux encoches latérales de retenues disposées de part et d'autre du moyen de retenue.

Le dispositif peut être réalisé d'une seule pièce formant la partie de socle et la partie de mât.

Avantageusement, le dispositif est réalisé en deux pièces, et le mât est monté à rotation par rapport au socle, et présente une configuration d'utilisation ouverte et une configuration fermée.

Selon une possibilité, la liaison pivot peut être formée par une charnière.

Selon une autre possibilité, le mât comporte, au niveau d'une extrémité opposée à celle présentant la surface d'appui, un arbre transversal, et le socle comporte, au niveau d'une extrémité longitudinale, un logement pour arbre prévu pour recevoir ledit arbre transversal, le mât étant escamoté dans une rainure longitudinale du socle dans une position fermée.

Avantageusement, le socle peut en outre comporter un arbre transversal coopérant avec un logement transversal pour arbre prévu sur le mât. L'arbre transversal du socle étant retenu par clipsage dans ledit logement transversal du mât dans une position fermée

Selon une forme particulière de réalisation, le mât comporte en outre un dégagement annulaire autre du logement transversal formant chambrage, pour recevoir, dans la configuration fermée, un crochet disposé sur l'arbre transversal.

### Description des figures

D'autres avantages et particularités de l'invention apparaîtront à la lecture de la description détaillée de mises en oeuvre et de modes de réalisation nullement limitatifs, au regard de dessins annexés sur lesquels :
- [Fig. 1] représente, dans une vue en perspective, un mode de réalisation d'un dispositif selon l'invention selon une configuration ouverte ;
- [Fig. 2] représente le dispositif selon l'invention selon une configuration fermée ;

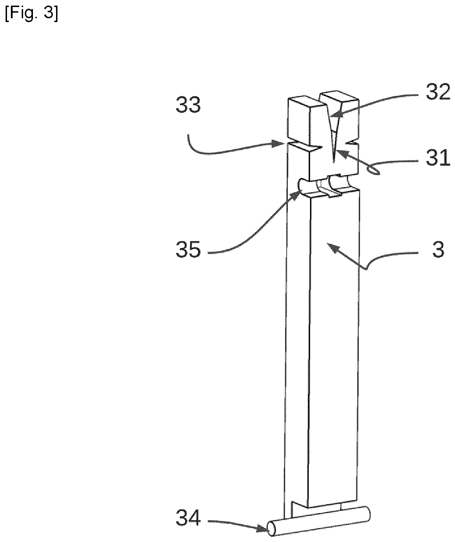

- [Fig. 3] représente le mât du dispositif représenté sur Figure 1 et Figure 2 ;
- [Fig. 4] représente le socle du dispositif représenté sur Figure 1 Figure 2 ;

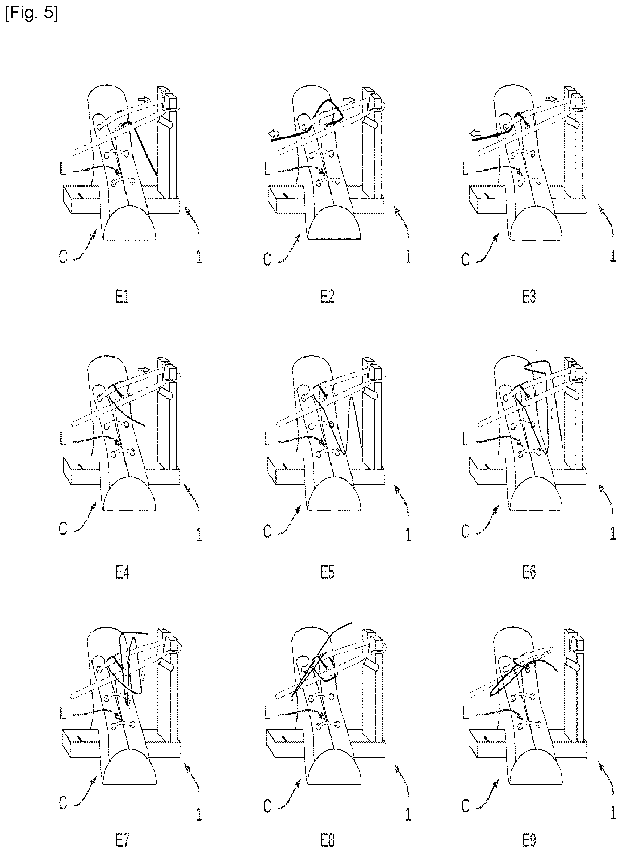

- [Fig. 5] représente les étape de nouage d'un lacet.

### Description de modes de réalisation

Les modes de réalisation décrits ci-après n'étant nullement limitatifs, on pourra notamment considérer des variantes de l'invention ne comprenant qu'une sélection de caractéristiques décrites, par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

Sur les figures un élément apparaissant sur plusieurs figures conserve la même référence.

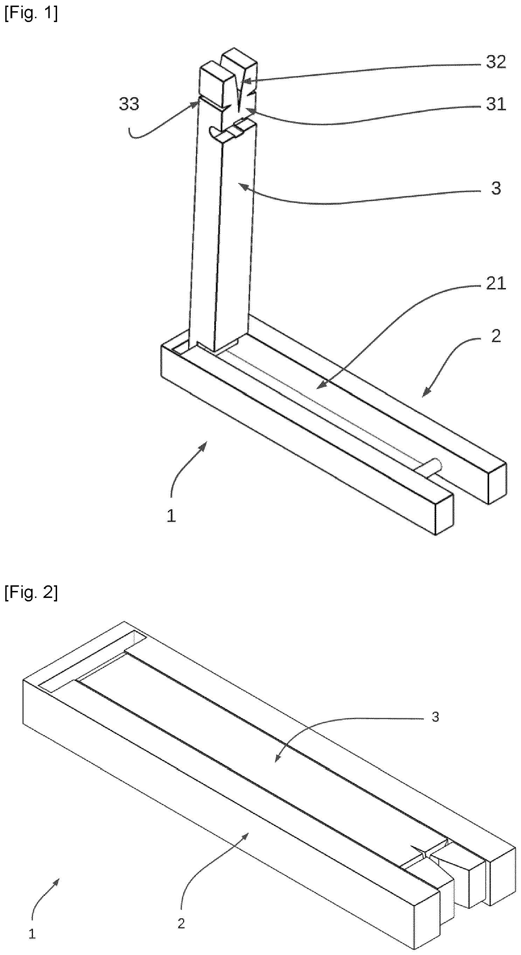

Figure 1 représente, dans une vue en perspective, un dispositif portable 1 selon l'invention.

Le dispositif comporte une partie formant socle 2 et une partie formant mât 3 dans une configuration d'utilisation.

Le mât présente en une extrémité, selon une direction longitudinale, une surface d'appui 31, tournée vers le haut, d'une partie du lacet. Selon le mode de réalisation représenté, le mât est formé d'une pièce. Plusieurs longueurs de mât pourraient être proposées, pour s'adapter à différentes hauteurs d'oeillets de laçage. Encore une autre possibilité serait de prévoir un mât présentant une partie comportant la surface d'appui qui soit escamotable et coulissante par rapport au socle 2.

Le mât présente en outre un moyen de retenue 32 par friction prévu pour maintenir ladite partie de lacet sur ladite surface d'appui.

Sur la Figure 1, le moyen de retenue 32 est une encoche tournée vers le haut, formée sur ladite extrémité, la surface d'appui étant formée par le fond de l'encoche. L'encoche a une forme de V

Selon une autre possibilité, non représentée, le moyen de retenue pourrait être formé par deux taquets coinceurs disposés de part et d'autre de la surface d'appui.

Le mât 3 peut en outre comporter deux encoches latérales 33 de retenues disposées de part et d'autre du moyen de retenue 32. Il est ainsi possible d'y retenir d'autre partie du lacet. D'autre moyens de retenues pourraient encore se trouver sur le mât 3.

Alors que le dispositif pourrait n'être formé que d'une pièce, il est ici avantageusement formé de deux pièces.

Plus précisément, le mât 3 est monté à rotation par rapport au socle 2, et le dispositif présente une configuration d'utilisation ouverte et une configuration fermée.

Cette liaison pivot pourrait être formée par une charnière.

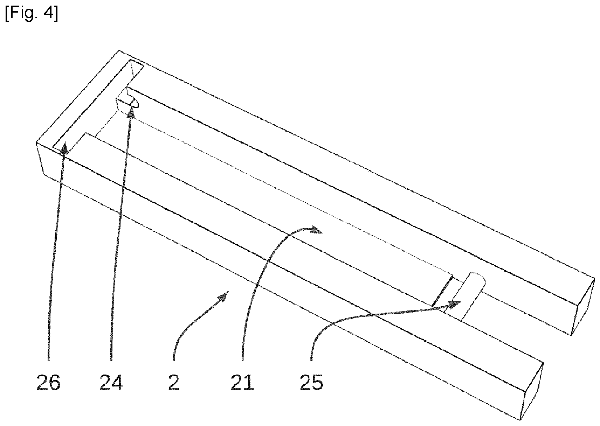

Selon une version préférée, le mât 3 comporte, au niveau d'une extrémité opposée à celle présentant la surface d'appui, un arbre transversal 34 (Figure 4) fixé sur un décrochement, et le socle 2 comporte, au niveau d'une extrémité longitudinale, un logement 24 pour l'arbre prévu pour recevoir ledit arbre transversal, le mât étant escamoté dans une rainure longitudinale (21) du socle dans une position fermée. On obtient ainsi une compacité maximale lorsque le dispositif portable 1 est refermé, comme représenté sur (Figure 2). Le transport en est ainsi facilité.

Pour le montage et le démontage du mât 3 par rapport au socle 2, il est prévu, dans le socle 2, une rainure permettant le passage de l'arbre transversal 34 et son accès au logement pour arbre 24.

Dans le mode de réalisation représenté, le socle comporte en outre un arbre transversal 25 coopérant avec un logement transversal 35 pour arbre prévu sur le mât 3, ledit arbre transversal étant retenu par clipsage dans ledit logement transversal dans une position fermée. Ainsi, la rotation est empêchée jusqu'à qu'un effort surmonte la résistance du clipsage.

### Utilisation du dispositif portable.

Pour pouvoir réaliser un nouage de lacets de chaussure C, le socle 1 est maintenu sous la chaussure C.

Le mât 3 est positionné à droite ou à gauche de la chaussure C à lacer. La tension générale du lacet L sur l'ensemble de la chaussure doit être ajustée.

Selon une étape E1, le lacet opposé à la chaussure est accroché au moyen de retenue 32. Il peut en outre être accroché au moyen de retenue 33 si nécessaire. Ce lacet sera par la suite désigné comme dormant, car, fixé, il n'est plus manipulé.

Selon une étape E2, avec le lacet libre, désigné par la suite comme courant, passer le courant au-dessus et en dessous du dormant.

Selon une étape E3, le courant est tendu. Cela forme un premier nouage qui est un demi-noeud (le premier noeud d'un noeud de chaussures).

Selon une étape E4, faire passer reposer l'extrémité du dormant en une position dépassant le centre du premier nouage.

Selon une étape E5, préparer une ganse avec l'extrémité du courant.

Selon une étape E6, passer la ganse sous le dormant.

Selon une étape E7, passer la ganse du courant sur la ganse du dormant et sous le courant.

Selon une étape E8, tendre la ganse du courant.

Selon une étape E9, finir le serrage en ajustant les ganses (les boucles).

Pour réaliser d'autre nouage, tel que celui d'un lacet de peignoir, le socle peut être fixé sur un support comme un pied de chaise ou de table.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

La portée de l'invention est définie dans les revendications annexées.

## Revendications

1. Dispositif portable (1) d'aide au nouage d'un lacet (L), ledit dispositif comportant une partie formant socle (2) et une partie formant mât (3) dans une configuration d'utilisation,
**caractérisé en ce que** ledit mât présente en une extrémité,
selon une direction longitudinale, une surface d'appui (31) d'une partie du lacet, et un moyen de retenue (32) par friction prévu pour maintenir ladite partie de lacet sur ladite surface.

2. Dispositif portable selon la revendication précédente, dans lequel le moyen de retenue (32) est une encoche formée sur ladite extrémité, la surface d'appui étant formée par le fond de l'encoche.

3. Dispositif portable selon la revendication précédente, dans lequel l'encoche a une forme de V.

4. Dispositif portable selon l'une quelconque des revendications précédentes, dans lequel le moyen de retenue (32) est formé par deux taquets coinceurs disposés de part et d'autre de la surface d'appui.

5. Dispositif portable selon l'une quelconque des revendications précédentes, dans lequel le mât (3) comportant en outre deux encoches latérales (33) de retenues disposées de part et d'autre du moyen de retenue (32).

6. Dispositif portable selon l'une quelconque des revendications précédentes, dans lequel le mât (3) est monté à rotation par rapport au socle (2), et présentant une configuration d'utilisation ouverte et une configuration fermée.

7. Dispositif portable selon la revendication précédente, dans lequel le mât (3) comporte, au niveau d'une extrémité opposée à celle présentant la surface d'appui, un arbre transversal (34), et le socle (2) comporte, au niveau d'une extrémité longitudinale, un logement (24) pour l'arbre prévu pour recevoir ledit arbre transversal, le mât étant escamoté dans une rainure longitudinale (21) du socle dans une position fermée.

8. Dispositif portable selon l'une des deux revendications précédentes, dans lequel le socle (2) comporte en outre un arbre transversal (25) coopérant avec un logement transversal (35) pour arbre prévu sur le mât (3), ledit arbre transversal étant retenu par clipsage dans ledit logement transversal dans une position fermée.

9. Dispositif portable selon la revendication précédente, dans lequel le mât (3) comporte en outre un dégagement annulaire autre du logement transversal (35) formant chambrage, pour recevoir, dans la configuration fermée, un crochet disposé sur l'arbre transversal (25).

## Patentansprüche

1. Tragbare Vorrichtung (1) zum Unterstützen bei einem Knoten eines Schnürsenkels (L), die Vorrichtung umfassend einen Teil, der eine Basis (2) ausbildet, und einen Teil, der eine Stange (3) ausbildet, in einer Verwendungskonfiguration,
**dadurch gekennzeichnet, dass** die Stange an einem Ende aufweist:
in einer Längsrichtung, eine Auflageoberfläche (31) eines Teils des Schnürsenkels und ein Reibungshaltemittel (32), das vorgesehen ist, um den Teil des Schnürsenkels auf der Oberfläche zu halten.

2. Tragbare Vorrichtung nach dem vorstehenden Anspruch, wobei das Haltemittel (32) eine an dem Ende ausgebildete Kerbe ist, wobei die Auflageoberfläche durch den Boden der Kerbe ausgebildet.

3. Tragbare Vorrichtung nach dem vorstehenden Anspruch, wobei die Kerbe eine V-Form besitzt.

4. Tragbare Vorrichtung nach einem der vorstehenden Ansprüche, wobei das Haltemittel (32) durch zwei Klemmansätze ausgebildet ist, die auf beiden Seiten der Auflageoberfläche angeordnet sind.

5. Tragbare Vorrichtung nach einem der vorstehenden Ansprüche, wobei die Stange (3) ferner zwei seitliche Haltekerben (33), die auf beiden Seiten des Haltemittels (32) angeordnet sind, umfasst.

6. Tragbare Vorrichtung nach einem der vorstehenden Ansprüche, wobei die Stange (3) relativ zu der Basis (2) drehbar montiert ist und eine offene Nutzungskonfiguration und eine geschlossene Konfiguration aufweist.

7. Tragbare Vorrichtung nach dem vorstehenden Anspruch, wobei die Stange (3) an einem Ende, das dem, das die Auflageoberfläche aufweist, gegenüberliegt, eine Querachse (34) aufweist und die Basis (2) an einem Längsende ein Gehäuse (24) für die Achse, das dafür bestimmt ist, die Querachse aufzunehmen, umfasst, wobei die Stange in einer geschlossenen Position in eine Längsnut (21) der Basis eingeklappt ist.

8. Tragbare Vorrichtung nach einem der zwei vorstehenden Ansprüche, wobei die Basis (2) ferner eine Querachse (25), die mit einer Queraufnahme (35) für die auf der Stange (3) vorgesehene Achse zusammenwirkt, umfasst, wobei die Querachse durch Einklipsen in das Quergehäuse in einer geschlossenen Position gehalten wird.

9. Tragbare Vorrichtung nach dem vorstehenden Anspruch, wobei die Stange (3) ferner einen weiteren ringförmigen Freiraum des Quergehäuses (35), der eine Versenkung ausbildet, umfasst, um in der geschlossenen Konfiguration einen an der Querachse (25) angeordneten Haken aufzunehmen.

## Claims

1. Portable device (1) for helping to tie a shoelace (L), said device comprising a base portion (2) and a mast portion (3) in a use configuration,
**characterized in that** said mast has, at one end,
in a longitudinal direction, a bearing surface (31) for a portion of the shoelace, and a friction retaining means (32) designed to hold said shoelace portion on said surface.

2. Portable device according to the preceding claim, wherein the retaining means (32) is a notch formed on said end, the bearing surface being formed by the bottom of the notch.

3. Portable device according to the preceding claim, wherein the notch is V-shaped.

4. Portable device according to any of the preceding claims, wherein the retaining means (32) is formed by two wedging cleats arranged on either side of the bearing surface.

5. Portable device according to any of the preceding claims, wherein the mast (3) further comprises two lateral retaining notches (33) arranged on either side of the retaining means (32).

6. Portable device according to any of the preceding claims, wherein the mast (3) is rotatably mounted relative to the base (2), and has an open use configuration and a closed configuration.

7. Portable device according to the preceding claim, wherein the mast (3) comprises, at an end opposite that having the bearing surface, a transverse shaft (34), and the base (2) comprises, at a longitudinal end, a shaft housing (24) intended to receive said transverse shaft, the mast being retracted into a longitudinal groove (21) of the base in a closed position.

8. Portable device according to either of the two preceding claims, wherein the base (2) further comprises a transverse shaft (25) cooperating with a transverse shaft housing (35) provided on the mast (3), said transverse shaft being retained by snap-fitting into said transverse housing in a closed position.

9. Portable device according to the preceding claim, wherein the mast (3) further comprises an annular recess, other than the transverse housing (35), forming a chamber, to receive, in the closed configuration, a hook arranged on the transverse shaft (25).
